# EUROPÄISCHE PATENTSCHRIFT

(11) **EP 1 426 639 B1**
(45) Veröffentlichungstag und Bekanntmachung des Hinweises auf die Patenterteilung: **29.07.2015**
(21) Anmeldenummer: 03027544.0
(22) Anmeldetag: 01.12.2003
(51) Int. Cl.: F16C 19/38, F16C 33/60, F16C 35/06, F03D 11/00

(54) **Verfahren zur Montage eines zweireihigen Kegelrollenlagers mit geteilten Lagerringen in einer Windkraftanlage**
Method for mounting a two row tapered roller bearing with segmented bearing rings in a wind motor
Procédé de montage d'un roulement à deux rangées de rouleaux coniques avec des bagues en plusieurs pièces dans une éolienne

(30) Priorität: 05.12.2002 DE 10256855
(43) Veröffentlichungstag der Anmeldung: 09.06.2004
(73) Patentinhaber: AB SKF, 415 50 Göteborg (SE)
(72) Erfinder: Herbst, Hubert, 97503 Gädheim (DE); Brandenstein, Manfred, 97776 Eussenheim (DE); Olschewski, Armin, 97422 Schweinfurt (DE); Neder, Günter, 97422 Schweinfurt (DE); Göbel, Werner, 97490 Poppenhausen (DE); Gessendorfer, Matthias, 97509 Unterspiesheim (DE)
(74) Vertreter: Gosdin, Michael

(56) Entgegenhaltungen:
- WO-A-02/079644
- DE-A- 10 102 255
- DE-U- 7 338 366
- DE-U- 20 116 649
- US-A- 5 176 457

## Beschreibung

Die Erfindung betrifft ein Verfahren zur Montage eines zweireihigen Kegelrollenlagers gemäß dem Oberbegriff des Anspruchs 1. Weiterhin betrifft die Erfindung eine Windkraftanlage mit einem zweireihigen Kegelrollenlager gemäß dem Oberbegriff des Anspruchs 13.

Die Montage von Wälzlagern bei Windkraftanlagen ist in der Regel sehr aufwendig, da die Lager zum einen relativ große Abmessungen aufweisen und somit sehr schwer sind und die Montage zum anderen häufig unter beengten Verhältnissen im Maschinenhaus der Windkraftanlage durchgeführt werden muss, das beispielsweise auf einem Turm montiert ist und von außen nur unter erschwerten Bedingungen zugänglich ist. In diesem Zusammenhang ist es bereits bekannt, bei Windkraftanlagen segmentierte Wälzlager einzusetzen, um die Montage zu erleichtern.

Ein segmentiertes Wälzlager ist beispielsweise aus der DE 201 16 649 U1 bekannt. Dort ist ein zweireihiges Kegelrollenlager offenbart, das einen Außenring und zwei Innenringe aufweist. Der Außenring und die beiden Innenringe sind in Umfangsrichtung aus jeweils vier Segmenten zusammengesetzt. Die Segmente des Außenrings und die Segmente der Innenringe sind jeweils mittels Schrauben befestigt. Durch Verdrehen von Exzentern besteht die Möglichkeit, die Segmente der Innenringe radial zu justieren. Das bekannte Wälzlager weist eine sehr präzise Justiermöglichkeit in Radialrichtung auf, ist allerdings in seiner Tragkraft durch die für die Justage verwendeten Exzenter begrenzt.

Aus der US 5,176,457 A ist ein zweireihiges Kegelrollenlager bekannt, das kraftschlüssig in einem Gehäuse angeordnet ist.

Der Erfindung liegt die Aufgabe zugrunde, ein Verfahren zur Montag eines Wälzlagers in einer Windkraftanlage anzugeben, das mit einem möglichst geringem Aufwand die Ausbildung einer hochwertigen Lagerung ermöglicht.

Diese Aufgabe wird durch die Merkmalskombination des Anspruchs 1 bzw. des Anspruchs 13 gelöst.

Das erfindungsgemäße Verfahren bezieht sich auf die Montage eines zweireihigen Kegelrollenlagers, das einen Außenring, einen ersten Innenring, einen zum ersten Innenring axial benachbarten zweiten Innenring und zwei axial nebeneinander angeordnete Reihen von Wälzkörpern aufweist in einem Ringraum zwischen einer Bohrungsfläche eines Gehäuses und einer Mantelfläche einer Welle einer Windkraftanlage. Der Außenring, der erste Innenring und der zweite Innenring sind jeweils in Umfangsrichtung aus mehreren Segmenten zusammengesetzt. Das erfindungsgemäße Verfahren zeichnet sich dadurch aus, dass die Segmente des ersten Innenrings und die Segmente des zweiten Innenrings mit ihren einander zugewandten axialen Stirnflächen einander derart angenähert werden, dass zu einem Zeitpunkt, zu dem sämtliche Segmente des Außenrings gerade an der Bohrungsfläche und sämtliche Segmente des ersten und zweiten Innenrings gerade an der Mantelfläche der Welle zur Anlage kommen, zwischen den axialen Stirnflächen der Segmente des ersten und zweiten Innenrings ein axialer Spalt verbleibt.

Das erfindungsgemäße Verfahren hat den Vorteil, dass die Montage des Kegelrollenlagers erheblich vereinfacht wird. Dadurch, dass die Segmente der beiden Innenringe beim Einführen des Kegelrollenlagers in den Ringraum zwischen der Bohrungsfläche und des Gehäuses zueinander axial beabstandet sind, ist die Bauhöhe des Kegelrollenlagers zunächst geringer als die radiale Ausdehnung des Ringraums, so dass das Kegelrollenlager problemlos in den Ringraum eingeführt werden kann.

Im weiteren Verlauf des erfindungsgemäßen Montageverfahrens können die Segmente des ersten und zweiten Innenrings einander soweit angenähert werden, dass der axiale Spalt geschlossen wird. Beim Schließen des axialen Spalts werden die Segmente des Außenrings gegen die Bohrungsfläche des Gehäuses sowie die Segmente des ersten und zweiten Innenrings gegen die Mantelfläche der Welle gepresst und dadurch fixiert. Insbesondere ist es möglich, dass beim Schließen des axialen Spalts eine Vorspannung im Kegelrollenlager erzeugt wird. Die Größe der Vorspannung kann über die Geometrie des Kegelrollenlagers vorgegeben werden. Die geschilderte Vorgehensweise hat den Vorteil, dass das Kegelrollenlager auf sehr einfache Weise auf der Welle und dem Gehäuse fixiert werden kann und dass mit einem sehr geringen Aufwand eine definierte Vorspannung im Kegelrollenlager eingestellt werden kann. Für die Einstellung der Vorspannung sind keinerlei Messungen erforderlich, sondern die Segmente des ersten und des zweiten Innenrings werden lediglich auf Block einander angenähert, so dass sich automatisch durch die Geometrie des Kegelrollenlagers die gewünschte Vorspannung ergibt.

Die Segmente des ersten Innenrings können mittels eines Verstellmittels axial zu den Segmenten des zweiten Innenrings hin verschoben werden, wobei als Verstellmittel vorzugsweise ein durchgehender oder segmentierter Ring verwendet wird, der mittels axialer Spannschrauben mit der Welle verschraubt wird. Die axiale Verschiebbarkeit der Segmente des zweiten Innenrings kann durch einen axialen Anschlag begrenzt werden, so dass auf die beschriebene Art und Weise eine Annäherung der Segmente des ersten und in den zweiten Innenring aneinander stattfindet.

In einer vorteilhaften Ausgestaltung wird eine zusätzliche Fixierung der Segmente des Außenrings und/oder der Segmente des ersten und zweiten Innenrings durchgeführt. Dadurch kann dauerhaft eine sehr hohe Positionsgenauigkeit der einzelnen Segmente auch unter Belastung sichergestellt werden. Zur zusätzlichen Fixierung der Segmente des Außenrings können Sicherungsschrauben durch Axialbohrungen in den jeweiligen Segmenten des Außenrings geführt und mit dem Gehäuse verschraubt werden. Die Segmente des ersten und zweiten Innenrings können durch axiales Einspannen zwischen dem Verstellmittel und dem Axialanschlag zusätzlich fixiert werden.

Die Wälzkörper können während der Montage mit Hilfe von segmentierten Käfigen gesichert werden. Der Einsatz von segmentierten Käfigen hat zum einen den Vorteil, dass eine segmentweise Montage und Demontage des Kegelrollenlagers ermöglicht wird. Weiterhin können durch segmentierte Käfige die Laufeigenschaften des Kegelrollenlagers verglichen mit einteiligen Käfigen verbessert werden.

Die erfindungsgemäße Windkraftanlage weist ein Gehäuse, eine Welle und ein zweireihiges Kegelrollenlager auf, das in einem Ringraum zwischen einer Bohrungsfläche des Gehäuses und einer Mantelfläche der Welle eingebaut ist. Das Kegelrollenlager weist einen Außenring, einen ersten Innenring, einen zum ersten Innenring axial benachbarten zweiten Innenring und zwei axial nebeneinander angeordnete Reihen von Wälzkörpern auf. Der Außenring, der erste Innenring und der zweite Innenring sind jeweils in Umfangsrichtung aus mehreren Segmenten zusammengesetzt. Die Besonderheit des erfindungsgemäßen Kegelrollenlagers besteht darin, dass dessen Bauhöhe, die als der radiale Abstand zwischen der äußeren Mantelfläche des Außenrings und den inneren Mantelflächen des ersten und zweiten Innenrings definiert ist, im nicht eingebauten Zustand bei sich berührenden axialen Stirnflächen des ersten und zweiten Innenrings größer ist als die radiale Ausdehnung des Ringraums. Durch diese Geometrie ist es möglich, dass Kegelrollenlager zwischen der Welle und dem Gehäuse durch Annähern des ersten und zweiten Innenrings einzuklemmen.

Um ein leicht gängiges Einführen des Kegelrollenlagers in den Ringraum zwischen der Welle und dem Gehäuse zu ermöglichen, ist es von Vorteil, wenn die Bauhöhe des Kegelrollenlagers durch Vergrößern des Abstandes der axialen Stirnflächen des ersten und zweiten Innenrings auf einen Wert kleiner als die radiale Ausdehnung des Ringraums reduzierbar ist.

In einem bevorzugten Ausführungsbeispiel ist das Kegelrollenlager so ausgebildet, dass sich wenigstens je ein Segment des ersten und des zweiten Innenrings und des Außenrings über den gleichen Winkelbereich erstrecken. Dies eröffnet die Möglichkeit abschließend mit diesen Segmenten eine segmentweise Montage und beginnend mit diesen Segmenten eine segmentweise Demontage des Kegelrollenlagers durchzuführen.

Beim Kegelrollenlager können Käfige zur Führung der Wälzkörper vorgesehen sein, die mehrere Segmente aufweisen. Die Segmentierung wird vorzugsweise so gewählt, dass in einen definierten Umfangsbereich ein Segment oder mehrere aneinander gereihte Segmente der Käfige passen. Der Umfangsbereich kann dadurch definiert werden, dass wenigstens je ein Segment des ersten und des zweiten Innenrings und des Außenrings bezüglich des eingeschlossenen Winkelbereichs zur Deckung gebracht werden. Dies hat den Vorteil, dass trotz der Käfige eine segmentweise Montage oder Demontage des Kegelrollenlagers möglich ist.

Die Erfindung wird nachstehend anhand des in der Zeichnung dargestellten Ausführungsbeispiels näher erläutert.

Es zeigen:
- Figur 1: ein Ausführungsbeispiel des erfindungsgemäßen Kegelrollenlagers zu einem ersten Zeitpunkt während der Montage in Schnittdarstellung und
- Figur 2: das in Figur 1 dargestellte Ausführungsbeispiel des erfindungsgemäßen Kegelrollenlagers zu einem weiteren Zeitpunkt während der Montage in Schnittdarstellung und
- Figur 3: das in den Figuren 1 und 2 dargestellte Ausführungsbeispiel eines Kegelrollenlagers im montierten Zustand in Schnittdarstellung.

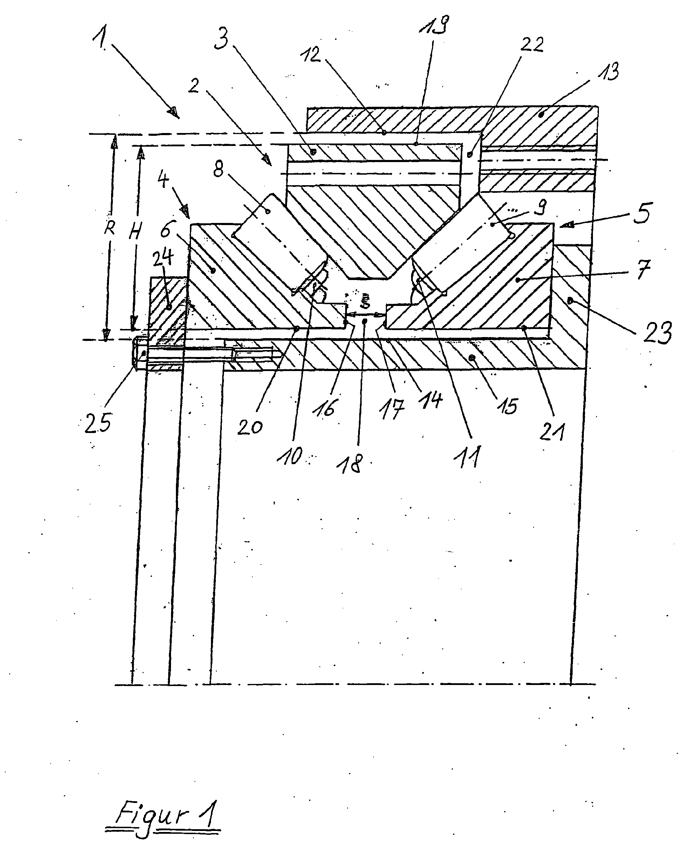

Figur 1 zeigt ein Ausführungsbeispiel des erfindungsgemäßen Kegelrollenlagers zu einem ersten Zeitpunkt während der Montage in Schnittdarstellung. Das Kegelrollenlager 1 weist einen Außenring 2 auf, der in Umfangsrichtung aus mehreren Außenringsegmenten 3 zusammengesetzt ist, sowie einen ersten Innenring 4 und einen zweiten Innenring 5, die axial nebeneinander angeordnet sind und in Umfangsrichtung aus ersten Innenringsegmenten 6 und zweiten Innenringsegmenten 7 zusammengesetzt sind. Zwischen dem Außenring 3 und den beiden Innenringen 4 und 5 rollen ein erster Satz von Wälzkörpern 8 und ein zweiter Satz von Wälzkörpern 9 ab, die axial nebeneinander angeordnet und in Käfigsegmenten 10 und 11 geführt sind, welche in Umfangsrichtung aneinander gereiht sind. Das Kegelrollenlager 1 ist zwischen einer Bohrungsfläche 12 eines Gehäuses 13 und einer Mantelfläche 14 einer Welle 15 angeordnet, die als Hohlwelle ausgebildet ist. Zwischen den einander benachbarten axialen Stirnflächen 16 und 17 der beiden Innenringe 4 und 5 ist ein Spalt 18 mit einer Spaltbreite S ausgebildet. Mit zunehmender Spaltbreite S nimmt eine Bauhöhe H des Kegelrollenlagers 1, die als radialer Abstand zwischen einer äußeren Mantelfläche 19 des Außenrings 2 und inneren Mantelfläche 20 und 21 der Innenringe 4 und 5 definiert ist, wegen der kegelförmigen Ausbildung des Außenrings 2 und der Innenringe 4 und 5 ab. Die Spaltbreite S ist zu dem in Figur 1 dargestellten Zeitpunkt der Montage so groß, dass die Bauhöhe H des Kegelrollenlagers 1 kleiner ist als die radiale Ausdehnung R eines Ringraums 22, der zwischen der Bohrungsfläche 12 des Gehäuses 13 und der äußeren Mantelfläche 14 der Hohlwelle 15 ausgebildet ist. Solange diese Relation zwischen der Bauhöhe H des Kegelrollenlagers 1 und der radialen Erstreckung R des Ringraums 22 erfüllt ist, ist es möglich, das Kegelrollenlager 1 bzw. dessen einzelne Segmente axial im Ringraum 22 zu verschieben.

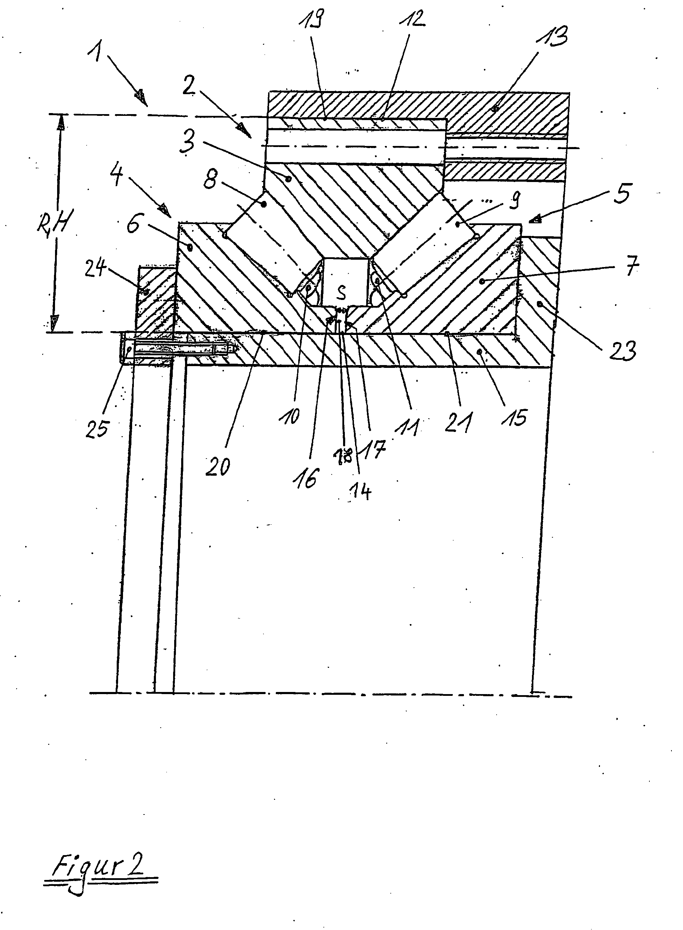

Im Rahmen des erfindungsgemäßen Montageverfahrens wird das Kegelrollenlager 1 bzw. werden einzelne Segmente des Kegelrollenlagers 1 in den Ringraum 22 verbracht und axial soweit verschoben, bis der zweite Innenring 5 axial an einen radialen Flansch 23 der Welle 15 anschlägt. Anschließend wird an dem dem Flansch 23 entgegengesetzten Ende der Welle 15 eine Scheibe 24 mittels Spannschrauben 25 axial an die Welle 15 angeschraubt. Die Scheibe 24 schlägt dabei axial am ersten Innenring 4 an und bewegt diesen auf den zweiten Innenring 5 zu, so dass sich die Spaltbreite S des Spaltes 18 verringert. Mit dem ersten Innenring 4 werden auch die ersten Wälzkörper 8, die axial fixiert im ersten Innenring 4 angeordnet sind, axial verschoben, so dass es in Zusammenwirkung mit dem Außenring 2 zu einer Zunahme der Bauhöhe H des Kegelrollenlagers 1 kommt. Die Zunahme der Bauhöhe H des Kegelrollenlagers 1 setzt sich solange fort, bis sowohl die äußere Mantelfläche 19 des Außenrings 2 an der Bohrungsfläche 12 als auch die inneren Mantelflächen 20 und 21 der beiden Innenringe 4 und 5 an der äußeren Mantelfläche 14 der Welle 15 anliegen. Diese Situation ist in Figur 2 dargestellt.

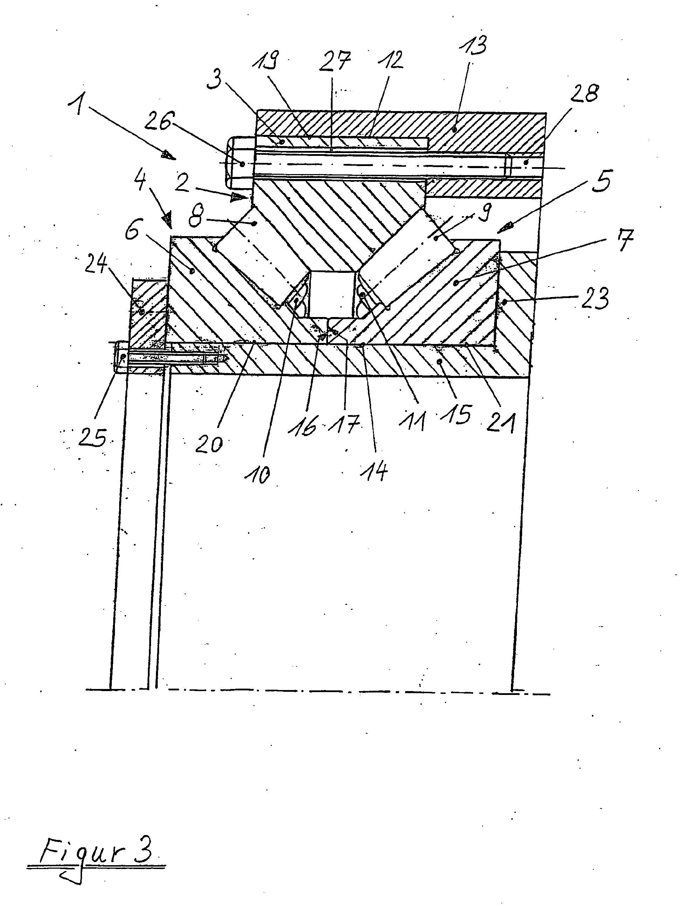

Figur 2 zeigt das in Figur 1 dargestellte Ausführungsbeispiel des Kegelrollenlagers 1 zu einem weiteren Zeitpunkt während der Montage in Schnittdarstellung. Für die Erfindung ist es von wesentlicher Bedeutung, dass zu dem in Figur 2 dargestellten Zeitpunkt, bei dem das Kegelrollenlager 1 sowohl an der Bohrungsfläche 12 als auch an der äußeren Mantelfläche 14 der Welle 15 anliegt, der Spalt 18 weiterhin vorhanden ist, d. h. die Spaltbreite S weiterhin größer Null ist. Damit diese Bedingung erfüllt werden kann, ist die Geometrie des Kegelrollenlagers 1 entsprechend auf die radiale Ausdehnung R des Ringraums 22 abgestimmt. Bei der Fortführung der Montage werden die Spannschrauben 25 weiter angezogen, so dass der Seitenring 24 axial gegen den ersten Innenring 4 gepresst wird. Da das Kegelrollenlager durch den Flansch 23 der Welle 15 axial eingespannt ist, versucht es dem so ausgeübten Druck radial auszuweichen. Eine mit diesem radialen Ausweichen einhergehende Zunahme der Bauhöhe H des Kegelrollenlagers 1 ist jedoch ab dem in Figur 2 dargestellten Zeitpunkt nicht mehr möglich, da das Kegelrollenlager 1 radial zwischen der Bohrungsfläche 12 des Gehäuses 13 und der äußeren Mantelfläche 14 der Welle 15 eingespannt ist. Somit wird das Kegelrollenlager 1 beim weiteren Anziehen der Spannschrauben 25 radial gegen die Bohrungsfläche 12 des Gehäuses 13 und gegen die äußere Mantelfläche 14 der Welle 15 gepresst, wobei die Innenringe 4 und 5 auf der Welle 15 und der Außenring 2 im Gehäuse 13 fixiert werden und damit insbesondere gegen Verdrehen gesichert werden. Gleichzeitig baut sich im Kegelrollenlager 1 eine zunehmende Vorspannung auf. Die Spannschrauben 25 werden soweit angezogen, bis der Spalt 18 verschwunden ist, d. h. bis die axialen Stirnflächen 16 und 17 der beiden Innenringe 4 und 5 einander berühren und somit die Spaltbreite S gleich Null ist. Dieser Zustand ist in Figur 3 dargestellt.

Figur 3 zeigt das in den Figuren 1 und 2 dargestellte Ausführungsbeispiel des Kegelrollenlagers 1 im montierten Zustand in Schnittdarstellung. Mit dem Verschwinden des Spalts 18 ist sowohl die Montage als auch die Einstellung des Kegelrollenlagers 1 beendet, da dessen Geometrie so auf die radiale Ausdehnung R des Ringraumes 22 abgestimmt ist, dass mit dem Verschwinden des Spalts 18 die gewünschte Vorspannung erreicht ist. Somit sind zur Befestigung und Einstellung des Kegelrollenlagers 1 lediglich die Spannschrauben 25 soweit anzuziehen, dass die gegenüberliegenden Stirnflächen 16 und 17 der beiden Innenringe 4 und 5 einander berühren. Weitere Einstellarbeiten sind nicht erforderlich. Es besteht allerdings die Möglichkeit, das Kegelrollenlager 1 in dieser Position zusätzlich zu sichern, indem Sicherungsschrauben 26 in dafür vorgesehene Axialbohrungen 27 des Außenrings 2 eingeführt und in korrespondierende Gewindebohrungen 28 des Gehäuses 13 eingeschraubt werden. Für die Innenringe 4 und 5 besteht in der Regel ohnehin eine zusätzliche Sicherungsmaßnahme, da diese axial zwischen dem Flansch 23 und dem Seitenring 24 eingespannt sind.

Um die vorstehend beschriebene Montage des Kegelrollenlagers 1 zu ermöglichen, ist dessen Geometrie so auszulegen, dass im nicht eingebauten Zustand die Bauhöhe H beim axialen Annähern der beiden Innenringe 4 und 5 aneinander von einem ersten Wert, der kleiner als die radiale Ausdehnung R des Ringraumes 22 ist, auf einen zweiten Wert, der größer als die radiale Ausdehnung R des Ringraumes 22 ist, vergrößert werden kann. Im eingebauten Zustand des Kegelrollenlagers 1 wird die Bauhöhe H durch die radiale Ausdehnung R des Ringraumes 22 begrenzt.

Der Seitenring 24 ist in der Regel einteilig ausgebildet. Um beispielsweise einen nachträglichen Austausch einzelner Segmente des Kegelrollenlagers 1 zu erleichtern, kann der Seitenring 24 jedoch auch segmentiert ausgebildet sein. Ebenso können auch die Käfige 10 und 11 segmentiert ausgebildet sein, um ein segmentweises Aus- und Einbauen des Kegelrollenlagers 1 zu ermöglichen. Die einzelnen Segmente der Käfige 10 und 11, die Innenringsegmente 6 und 7 sowie die Außenringsegmente 3 sind dabei jeweils in ihren Abmessungen aufeinander abgestimmt, d. h. ein oder mehrere Segmente der Käfige 10 und 11 schließen jeweils den gleichen Winkelbereich ein wie ein Außenringsegment 3 bzw. wie jeweils eines der Innenringsegmente 6 und 7. Insbesondere kann jedes Innenringsegment 6 und 7 und jedes Außenringsegment 3 den gleichen Winkelbereich einschließen.

### Bezugszeichen

- 1: Kegelrollenlager
- 2: Außenring
- 3: Außenringsegment
- 4: erster Innenring
- 5: zweiter Innenring
- 6: erstes Innenringsegment
- 7: zweites Innenringsegment
- 8: erste Wälzkörper
- 9: zweite Wälzkörper
- 10: erster Käfig
- 11: zweiter Käfig
- 12: Bohrungsfläche
- 13: Gehäuse
- 14: Mantelfläche der Welle 15
- 15: Welle
- 16: axiale Stirnfläche des ersten Innenrings 4
- 17: axiale Stirnfläche des zweiten Innenrings 5
- 18: Spalt
- 19: äußere Mantelfläche des Außenrings 2
- 20: innere Mantelfläche des ersten Innenrings 4
- 21: innere Mantelfläche des zweiten Innenrings 5
- 22: Ringraum
- 23: Flansch
- 24: Seitenring
- 25: Spannschraube
- 26: Sicherungsschraube
- 27: Axialbohrung
- 28: axiale Gewindebohrung

## Patentansprüche

1. Verfahren zum Montieren eines zweireihigen Kegelrollenlagers (1), das einen Außenring (2), einen ersten Innenring (4), einen zum ersten Innenring (4) axial benachbarten zweiten Innenring (5) und zwei axial nebeneinander angeordnete Reihen von Wälzkörpern (8, 9) aufweist, in einem Ringraum (22) zwischen einer Bohrungsfläche (12) eines Gehäuses (13) und einer Mantelfläche (14) einer Welle (15) einer Windkraftanlage, wobei der Außenring (2), der erste Innenring (4) und der zweite Innenring (5) jeweils in Umfangsrichtung aus mehreren Segmenten zusammengesetzt werden, **dadurch gekennzeichnet, dass** die Segmente (6) des ersten Innenrings (4) und die Segmente (7) des zweiten Innenrings (5) mit ihren einander zugewandten axialen Stirnflächen (16, 17) einander derart angenähert werden, dass zu einem Zeitpunkt, zu dem sämtliche Segmente (3) des Außenrings (2) gerade an der Bohrungsfläche (12) und sämtliche Segmente (6, 7) des ersten und zweiten Innenrings (4, 5) gerade an der Mantelfläche (14) der Welle (15) zur Anlage kommen, zwischen den axialen Stirnflächen (16, 17) der Segmente (6, 7) des ersten und zweiten Innenrings (4, 5) ein axialer Spalt (18) verbleibt.

2. Verfahren nach Anspruch 1, **dadurch gekennzeichnet, dass** die Segmente (6, 7) des ersten und zweiten Innenrings (4, 5) einander soweit angenähert werden, dass der axiale Spalt (18) geschlossen wird.

3. Verfahren nach Anspruch 2, **dadurch gekennzeichnet, dass** beim Schließen des axialen Spalts (18) die Segmente (3) des Außenrings (2) gegen die Bohrungsfläche (12) des Gehäuses (13) sowie die Segmente (6, 7) des ersten und zweiten Innenrings (4, 5) gegen die Mantelfläche (14) der Welle (15) gepresst werden und dadurch fixiert werden.

4. Verfahren nach einem der Ansprüche 2 oder 3, **dadurch gekennzeichnet, dass** beim Schließen des axialen Spalts (18) eine Vorspannung im Kegelrollenlager (1) erzeugt wird.

5. Verfahren nach Anspruch 4, **dadurch gekennzeichnet, dass** die Größe der Vorspannung über die Geometrie des Kegelrollenlagers (1) vorgegeben wird.

6. Verfahren nach einem der vorhergehenden Ansprüche, **dadurch gekennzeichnet, dass** die Segmente (6) des ersten Innenrings (4) mittels eines Verstellmittels (24) axial zu den Segmenten (7) des zweiten Innenrings (5) hin verschoben werden.

7. Verfahren nach Anspruch 6, **dadurch gekennzeichnet, dass** als Verstellmittel (24) ein durchgehender oder segmentierter Ring verwendet wird, der mittels axialer Spannschrauben (25) mit der Welle (15) verschraubt wird.

8. Verfahren nach einem der vorhergehenden Ansprüche, **dadurch gekennzeichnet, dass** die axiale Verschiebbarkeit der Segmente (7) des zweiten Innenrings (5) durch einen axialen Anschlag (23) begrenzt wird.

9. Verfahren nach einem der vorhergehenden Ansprüche, **dadurch gekennzeichnet, dass** eine zusätzliche Fixierung der Segmente (3) des Außenrings (2) und/oder der Segmente (6, 7) des ersten und zweiten Innenrings (4, 5) durchgeführt wird.

10. Verfahren nach Anspruch 9, **dadurch gekennzeichnet, dass** zur zusätzlichen Fixierung der Segmente (3) des Außenrings (2) Sicherungsschrauben (26) durch Axialbohrungen (27) in den Segmenten (3) des Außenrings (2) geführt und mit dem Gehäuse (13) verschraubt werden.

11. Verfahren nach einem der Ansprüche 9 oder 10, **dadurch gekennzeichnet, dass** die Segmente (6, 7) des ersten und zweiten Innenrings (4, 5) durch axiales Einspannen zwischen dem Verstellmittel (24) und dem Axialanschlag (23) zusätzlich fixiert werden.

12. Verfahren nach einem der vorhergehenden Ansprüche, **dadurch gekennzeichnet, dass** die Wälzkörper (8, 9) während der Montage mit Hilfe von segmentierten Käfigen (10, 11) gesichert werden.

13. Windkraftanlage mit einem Gehäuse (13), einer Welle (15) und einem zweireihigen Kegelrollenlager (1), das in einem Ringraum (22) zwischen einer Bohrungsfläche (12) des Gehäuses (13) und einer Mantelfläche (14) der Welle (15) eingebaut ist und einen Außenring (2), einen ersten Innenring (4), einen zum ersten Innenring (4) axial benachbarten zweiten Innenring (5) und zwei axial nebeneinander angeordnete Reihen von Wälzkörpern (8, 9) aufweist, wobei der Außenring (2), der erste Innenring (4) und der zweite Innenring (5) jeweils in Umfangsrichtung aus mehreren Segmenten zusammengesetzt sind, **dadurch gekennzeichnet, dass** die Bauhöhe (H) des Kegelrollenlagers (1), die als der radiale Abstand zwischen der äußeren Mantelfläche (19) des Außenrings (2) und den inneren Mantelflächen (20, 21) des ersten und zweiten Innenrings (4, 5) definiert ist, im nicht eingebauten Zustand bei sich berührenden axialen Stirnflächen (16, 17) des ersten und zweiten Innenrings (4, 5) größer ist als die radiale Ausdehnung (R) des Ringraums (22).

14. Windkraftanlage nach Anspruch 13, **dadurch gekennzeichnet, dass** die Bauhöhe (H) des Kegelrollenlagers (1) durch Vergrößern des Abstandes (S) der axialen Stirnflächen (16, 17) des ersten und zweiten Innenrings (4, 5) auf einen Wert kleiner als die radiale Ausdehnung (R) des Ringraums (22) reduzierbar ist.

15. Windkraftanlage nach einem der Ansprüche 13 oder 14, **dadurch gekennzeichnet, dass** sich wenigstens je ein Segment (6, 7, 3) des ersten und des zweiten Innenrings (4, 5) und des Außenrings (2) über den gleichen Winkelbereich erstrecken.

16. Windkraftanlage nach einem der Ansprüche 13 bis 15, **dadurch gekennzeichnet, dass** Käfige (10, 11) zur Führung der Wälzkörper (8, 9) vorgesehen sind, die mehrere Segmente aufweisen.

17. Windkraftanlage nach Anspruch 16, **dadurch gekennzeichnet, dass** wenigstens je ein Segment (6, 7, 3) des ersten und des zweiten Innenrings (4, 5) und des Außenrings (2) bezüglich des eingeschlossenen Winkelbereichs zur Deckung gebracht werden kann und für den so definierten Umfangsbereich bezüglich ihrer Umfangserstreckung jeweils allein oder aneinandergereiht passende Segmente der Käfige (10, 11) vorgesehen sind.

## Claims

1. Method for mounting a twin-row tapered roller bearing (1) which has an outer ring (2), a first inner ring (4), a second inner ring (5) which is adjacent axially with respect to the first inner ring (4), and two rows of rolling bodies (8, 9) which are arranged axially next to one another, in an annular space (22) between a hole face (12) of a housing (13) and a circumferential face (14) of a shaft (15) of a wind power plant, the outer ring (2), the first inner ring (4) and the second inner ring (5) being assembled in each case in the circumferential direction from a plurality of segments, **characterized in that** the segments (6) of the first inner ring (4) and the segments (7) of the second inner ring (5) converge with their mutually facing axial end faces (16, 17) in such a way that, at a time at which all the segments (3) of the outer ring (2) come to lie precisely on the hole face (12) and all the segments (6, 7) of the first and second inner ring (4, 5) come to lie precisely on the circumferential face (14) of the shaft (15), an axial gap (18) remains between the axial end faces (16, 17) of the segments (6, 7) of the first and second inner ring (4, 5).

2. Method according to Claim 1, **characterized in that** the segments (6, 7) of the first and second inner ring (4, 5) converge to such an extent that the axial gap (18) is closed.

3. Method according to Claim 2, **characterized in that**, during closing of the axial gap (18), the segments (3) of the outer ring (2) are pressed against the hole face (12) of the housing (13) and are fixed as a result and the segments (6, 7) of the first and second inner ring (4, 5) are pressed against the circumferential face (14) of the shaft (15) and are fixed as a result.

4. Method according to either of Claims 2 and 3, **characterized in that**, during closing of the axial gap (18), a prestress is generated in the tapered roller bearing (1).

5. Method according to Claim 4, **characterized in that** the magnitude of the prestress is predefined via the geometry of the tapered roller bearing (1).

6. Method according to one of the preceding claims, **characterized in that** the segments (6) of the first inner ring (4) are displaced axially towards the segments (7) of the second inner ring (5) by means of an adjusting means (24).

7. Method according to Claim 6, **characterized in that** a continuous or segmented ring which is screwed to the shaft (15) by means of axial clamping screws (25) is used as adjusting means (24).

8. Method according to one of the preceding claims, **characterized in that** the axial displaceability of the segments (7) of the second inner ring (5) is limited by way of an axial stop (23).

9. Method according to one of the preceding claims, **characterized in that** additional fixing of the segments (3) of the outer ring (2) and/or the segments (6, 7) of the first and second inner ring (4, 5) is carried out.

10. Method according to Claim 9, **characterized in that** securing screws (26) are guided through axial holes (27) in the segments (3) of the outer ring (2) and are screwed to the housing (13) for additional fixing of the segments (3) of the outer ring (2).

11. Method according to either of Claims 9 and 10, **characterized in that** the segments (6, 7) of the first and second inner ring (4, 5) are additionally fixed by being clamped in axially between the adjusting means (24) and the axial stop (23).

12. Method according to one of the preceding claims, **characterized in that** the rolling bodies (8, 9) are secured during mounting with the aid of segmented cages (10, 11).

13. Wind power plant having a housing (13), a shaft (15) and a twin-row tapered roller bearing (1) which is installed in an annular space (22) between a hole face (12) of the housing (13) and a circumferential face (14) of the shaft (15) and has an outer ring (2), a first inner ring (4), a second inner ring (5) which is adjacent axially with respect to the first inner ring (4), and two rows of rolling bodies (8, 9) which are arranged axially next to one another, the outer ring (2), the first inner ring (4) and the second inner ring (5) being assembled in each case in the circumferential direction from a plurality of segments, **characterized in that** the overall height (H) of the tapered roller bearing (1) which is defined as the radial spacing between the outer circumferential face (19) of the outer ring (2) and the inner circumferential faces (20, 21) of the first and second inner ring (4, 5) is greater in the non-installed state with axial end faces (16, 17) of the first and second inner ring (4, 5) in contact with one another than the radial extent (R) of the annular space (22).

14. Wind power plant according to Claim 13, **characterized in that** the overall height (H) of the tapered roller bearing (1) can be reduced to a value smaller than the radial extent (R) of the annular space (22) by way of the spacing (S) of the axial end faces (16, 17) of the first and second inner ring (4, 5) being increased.

15. Wind power plant according to either of Claims 13 and 14, **characterized in that** at least in each case one segment (6, 7, 3) of the first and the second inner ring (4, 5) and of the outer ring (2) extend over the same angular range.

16. Wind power plant according to one of Claims 13 to 15, **characterized in that** cages (10, 11) which have a plurality of segments are provided for guiding the rolling bodies (8, 9).

17. Wind power plant according to Claim 16, **characterized in that** at least in each case one segment (6, 7, 3) of the first and the second inner ring (4, 5) and of the outer ring (2) can be brought into congruence with regard to the enclosed angular range, and segments of the cages (10, 11) which fit with regard to their circumferential extent in each case on their own or linked together are provided for the circumferential region which is defined in this way.

## Revendications

1. Procédé de montage d'un roulement à deux rangées de rouleaux coniques (1), qui comprend une bague extérieure (2), une première bague intérieure (4), une deuxième bague intérieure (5) adjacente axialement à la première bague intérieure (4) et deux rangées, disposées axialement l'une à côté de l'autre, de corps de roulement (8, 9), dans un espace annulaire (22) entre une surface d'alésage (12) d'un boîtier (13) et une surface d'enveloppe (14) d'un arbre (15) d'une éolienne, la bague extérieure (2), la première bague intérieure (4) et la deuxième bague intérieure (5) étant respectivement composées de plusieurs segments dans la direction circonférentielle, **caractérisé en ce que** les segments (6) de la première bague intérieure (4) et les segments (7) de la deuxième bague intérieure (5) sont rapprochés les uns des autres par leurs surfaces frontales axiales (16, 17) tournées les unes vers les autres, de telle sorte qu'au moment même où tous les segments (3) de la bague extérieure (2) viennent s'appuyer contre la surface d'alésage (12) et tous les segments (6, 7) de la première et de la deuxième bague intérieure (4, 5) viennent s'appuyer contre la surface d'enveloppe (14) de l'arbre (15), un interstice axial (18) reste entre les surfaces frontales axiales (16, 17) des segments (6, 7) de la première et de la deuxième bague intérieure (4, 5) .

2. Procédé selon la revendication 1, **caractérisé en ce que** les segments (6, 7) de la première et de la deuxième bague intérieure (4, 5) sont rapprochés les uns des autres dans une mesure telle que l'interstice axial (18) soit fermé.

3. Procédé selon la revendication 2, **caractérisé en ce que**, lors de la fermeture de l'interstice axial (18), les segments (3) de la bague extérieure (2) sont pressés contre la surface d'alésage (12) du boîtier (13) et sont de ce fait fixés, et les segments (6, 7) de la première et de la deuxième bague intérieure (4, 5) sont pressés contre la surface d'enveloppe (14) de l'arbre (15) et sont de ce fait fixés.

4. Procédé selon l'une quelconque des revendications 2 et 3, **caractérisé en ce que**, lors de la fermeture de l'interstice axial (18), une précontrainte est générée dans le roulement à rouleaux coniques (1).

5. Procédé selon la revendication 4, **caractérisé en ce que** l'ampleur de la précontrainte est prédéfinie par la géométrie du roulement à rouleaux coniques (1).

6. Procédé selon l'une quelconque des revendications précédentes, **caractérisé en ce que** les segments (6) de la première bague intérieure (4) sont déplacés axialement en direction des segments (7) de la deuxième bague intérieure (5) par le biais d'un moyen de réglage (24).

7. Procédé selon la revendication 6, **caractérisé en ce qu'**on utilise en tant que moyen de réglage (24) une bague continue ou segmentée qui est vissée sur l'arbre (15) au moyen de vis de serrage axiales (25) .

8. Procédé selon l'une quelconque des revendications précédentes, **caractérisé en ce que** la mobilité axiale des segments (7) de la deuxième bague intérieure (5) est limitée par une butée axiale (23) .

9. Procédé selon l'une quelconque des revendications précédentes, **caractérisé en ce qu'**une fixation supplémentaire des segments (3) de la bague extérieure (2) et/ou des segments (6, 7) de la première et de la deuxième bague intérieure (4, 5) est effectuée.

10. Procédé selon la revendication 9, **caractérisé en ce qu'**en vue de la fixation supplémentaire des segments (3) de la bague extérieure (2), des vis de fixation (26) sont guidées à travers des alésages axiaux (27) dans les segments (3) de la bague extérieure (2) et sont vissées sur le boîtier (13).

11. Procédé selon l'une quelconque des revendications 9 et 10, **caractérisé en ce que** les segments (6, 7) de la première et de la deuxième bague intérieure (4, 5) sont fixés de manière supplémentaire par serrage axial entre le moyen de réglage (24) et la butée axiale (23).

12. Procédé selon l'une quelconque des revendications précédentes, **caractérisé en ce que** les corps de roulement (8, 9) sont fixés pendant le montage à l'aide de cages segmentées (10, 11).

13. Éolienne comprenant un boîtier (13), un arbre (15) et un roulement à deux rangées de rouleaux coniques (1) qui est installé dans un espace annulaire (22) entre une surface d'alésage (12) du boîtier (13) et une surface d'enveloppe (14) de l'arbre (15) et qui comprend une bague extérieure (2), une première bague intérieure (4), une deuxième bague intérieure (5) adjacente axialement à la première bague intérieure (4) et deux rangées, disposées axialement l'une à côté de l'autre, de corps de roulement (8, 9), la bague extérieure (2), la première bague intérieure (4) et la deuxième bague intérieure (5) étant respectivement composées de plusieurs segments dans la direction circonférentielle, **caractérisée en ce que** la hauteur de construction (H) du roulement à rouleaux coniques (1), qui est définie en tant que la distance radiale entre la surface d'enveloppe extérieure (19) de la bague extérieure (2) et les surfaces d'enveloppe intérieures (20, 21) de la première et de la deuxième bague intérieure (4, 5), est, dans l'état non installé lorsque les surfaces frontales axiales (16, 17) de la première et de la deuxième bague intérieure (4, 5) sont en contact, supérieure à l'étendue radiale (R) de l'espace annulaire (22).

14. Éolienne selon la revendication 13, **caractérisée en ce que** la hauteur de construction (H) du roulement à rouleaux coniques (1) peut être réduite en augmentant la distance (S) entre les surfaces frontales axiales (16, 17) de la première et de la deuxième bague intérieure (4, 5) à une valeur inférieure à l'étendue radiale (R) de l'espace annulaire (22).

15. Éolienne selon l'une quelconque des revendications 13 et 14, **caractérisée en ce qu'**au moins un segment respectif (6, 7, 3) de la première et de la deuxième bague intérieure (4, 5) et de la bague extérieure (2) s'étend sur la même région angulaire.

16. Éolienne selon l'une quelconque des revendications 13 à 15, **caractérisée en ce que** des cages (10, 11) sont prévues pour le guidage des corps de roulement (8, 9), lesquelles comprennent plusieurs segments.

17. Éolienne selon la revendication 16, **caractérisée en ce qu'**au moins un segment respectif (6, 7, 3) de la première et de la deuxième bague intérieure (4, 5) et de la bague extérieure (2) peut être amené en coïncidence par rapport à la région angulaire incluse, et pour la région circonférentielle ainsi définie, des segments des cages (10, 11) respectivement ajustés isolément ou de manière juxtaposée par rapport à leur étendue circonférentielle sont prévus.
